(19) Europäisches Patentamt
European Patent Office
Office européen des brevets

(11) **EP 1 787 877 B1**

(12) **EUROPÄISCHE PATENTSCHRIFT**

(45) Veröffentlichungstag und Bekanntmachung des Hinweises auf die Patenterteilung:
**09.04.2008 Patentblatt 2008/15**

(51) Int Cl.:
***B60S 1/08*** *(2006.01)*

(21) Anmeldenummer: **06123211.2**

(22) Anmeldetag: **31.10.2006**

(54) **Scheibenwischanlage mit Steuerungsmitteln zum Fahren des Wischers in eine Parkstellung**

Wiper system with with control means for driving a wiper to a park position

Système d'essuie-glace avec des moyens de commande pour l'entraînement du essuie-glace en position d'arrêt

(84) Benannte Vertragsstaaten:
**CZ DE FR GB PL**

(30) Priorität: **18.11.2005 DE 102005055054**

(43) Veröffentlichungstag der Anmeldung:
**23.05.2007 Patentblatt 2007/21**

(73) Patentinhaber: **ROBERT BOSCH GMBH**
**70442 Stuttgart (DE)**

(72) Erfinder:
• **May, Michael**
**77654, Offenburg (DE)**
• **Eckert, Klaus**
**77770, Durbach Ebersweier (DE)**

(56) Entgegenhaltungen:
**DE-A1-9102004 016 44     DE-C1- 19 700 457**

**Beschreibung**

Die Erfindung betrifft eine Scheibenwischanlage für ein Kraftfahrzeug, mit mindestens einem von einem Reversiermotor zwischen zwei Wendelagen angetriebenen Wischer und einer elektronischen Steuerung, in der mindestens eine Wischkennlinie vorgegeben ist, deren Sollwertverlauf mittels einer intern vorgebbaren Zeitbasis sequenziell abarbeitbar ist, um einen Sollablauf einer Bewegung des Wischers zu erzeugen.

Stand der Technik

Eine derartige Wischanlage mit elektronischen Steuerungsmitteln für Wisch- und/oder Parkbewegungen des Wischers ist bereits aus der DE 197 00 457 C1 bekannt.

Bei neueren Wischanlagen werden zunehmend Antriebe mit reversierenden Elektromotoren eingesetzt, bei denen der Motor in unterschiedlichen Drehrichtungen entsprechend der Hin- und Herbewegung des Wischers gesteuert wird. Dabei ist es erforderlich, eine elektronische Steuerung vorzusehen, die bei eingeschaltetem Wischer z. B. den Eingang von Positionssensorsignalen erfasst, um zum richtigen Zeitpunkt die Drehrichtung des Motors umschalten zu können. Derartige Reversiermotoren ermöglichen einen flexibleren mechanischen Aufbau der Wischanlage und eine erweiterte Funktionalität, beispielsweise eine erweiterte Parklage, also eine Endposition des Wischers, die gegenüber der unteren Umkehrlage abgesenkt ist.

Die Steuerungs- bzw. Regelungseinheit moderner Reversierwischanlagen verfügt häufig über eine als Mikrocontroller ausgelegte Auswerteeinheit. Um einen vorgebbaren Ablauf der Wischerbewegung zu erzeugen, ist es, beispielsweise aus der gattungsgemäßen DE 197 00 457 C1 bekannt, im Mikrocontroller eine Tabelle mit Sollwerten zu speichern. Der Mikrocontroller weist ferner einen Taktgeber auf, um eine interne Zeitbasis zu erzeugen. Die Tabellenwerte werden durch den Taktgeber angesteuert und liefern beim sequenziellen Auslesen im Strom der Taktimpulse digitale Sollwerte, die den Sollwinkelverlauf des Wischers, beispielsweise eine Sinusfunktion, darstellen. Die Periode dieser Funktion definiert die Wischgeschwindigkeit und kann durch Einwirkung auf die Frequenz, genauer: die zeitliche Schrittweite, der Taktimpulse eingestellt werden. Durch die Änderung der Lesegeschwindigkeit einer einzigen tabellierten, oder anderweitig vorgegebenen Wischkennlinie lassen sich also unterschiedliche Geschwindigkeitsstufen des Wischers realisieren.

Es ist außerdem bekannt, in der Wischkennlinie keine physikalischen Sollwerte zu tabellieren, die z. B. bestimmte Wischwinkel, d. h. Wischerpositionen, repräsentieren. Vielmehr werden in die Speichertabelle so genannte normierte Sollwerte eingetragen, z. B. Zahlwerte zwischen 0 und 1. Auch diese normierten Sollwerte repräsentieren, wenn auch in abstrakterer Form, einen Sollverlauf der Wischbewegung. Die Wischbewegung wird in diesem Fall dadurch realisiert, dass die ausgelesenen normierten Sollwerte jeweils denormiert, d. h. in einen physikalischen Sollwert umgerechnet werden. Üblicherweise werden die normierten Wischwinkel über eine Geradengleichung in die physikalischen Wischwinkel umgerechnet, wobei die jeweils tatsächlich gegebenen physikalischen Winkelwerte der oberen und unteren Umkehrlagen als vorgebbare Skalierung in die Bestimmung der Koeffizienten der linearen Funktion eingehen. Dieses Vorgehen bietet den Vorteil, dass die recht komplexe Berechnung der Wischkennlinie im voraus, außerhalb des Mikrocontrollers, erfolgen kann, dennoch aber eine nachträgliche Anpassung der Wischkennlinie an veränderte Parameter möglich ist. Eine ursprünglich für einen Wischwinkelbereich von 20 bis 150 Grad berechnete, normierte Wischkennlinie kann durch die Denormierung, in die wie erwähnt der vorgebbare Wischwinkelbereich eingeht, also durch vorgebbare neue Skalierwerte von z. B. 10 bis 160 Grad, auf einfache Weise aufgespreizt werden, um den neuen Wischwinkelbereich abzudecken. Der gewünschte Wischwinkelbereich kann einfach durch Programmierung des Mikrocontrollers vorgegeben werden. In jedem Fall werden die normierten Sollwerte mittels der internen Zeitbasis sequenziell abgearbeitet, d. h. gemäß dem vorgegebenen Zeittakt ausgelesen und denormiert.

Die beschriebene bekannte Arbeitsweise der Steuerung der Wischanlage mittels tabellierter Sollwerte führt jedoch, wenn der Wischer abgeschaltet wird und in eine unterhalb der unteren Wendelage (Umkehrlage) liegende Parkstellung gefahren werden soll, zu folgender Problematik. Wenn beim Wischen während der Abwärtsbewegung (Wischarme bewegen sich Richtung Motorhaube) am Lenkstockschalter ausgeschaltet wird, fährt der Wischer bisher zuerst gemäß der laufenden Wischkennlinie in die untere Umkehrlage, bleibt dort kurz stehen und fährt dann erst nach ganz unten in die erweiterte Parkstellung (EPS). Diese ruckhafte Bewegung wird vom Fahrer als störend empfunden. Andererseits ist eine zur Behebung dieses unerwünschten Effekts mögliche spezifische Änderung insbesondere der Parameter für Winkel und Drehzahl mit einem hohen Applikations-Aufwand verbunden.

Vorteile der Erfindung

Erfindungsgemäß ist vorgesehen, aus der laufenden Abwärtswischbewegung heraus abzuparken. Dazu ist das Abarbeiten der Wischkennlinie an einem vorgebbaren Punkt des Abwärtswischens durch Anhalten der Zeitbasis unterbrechbar, so dass bis dahin nur ein Teil der Wischkurve realisiert ist. Die Wischbewegung wird jedoch, bei angehaltener Zeitbasis, ab diesem Punkt bis zu einem weiteren Punkt durch ein Zwischenstück stetig verlängert. Von diesem weiteren Punkt aus ist eine Parklage des Wischers durch Abarbeiten des verbliebenen Teils der Wischkennlinie bei dann weiterlaufender Zeitbasis erreichbar. Durch die Verlängerung der Wischkurve mittels eines in den Ablauf der Wischkennlinie für die normale Wischbewegung stetig eingesetzten Zwischenstücks können die Wischerarme vorteilhafterweise immer mit gleicher Bewegung und harmonisch in die Parkstellung fahren und zwar unabhängig davon, zu welchem Zeitpunkt das Wischen ausgeschaltet wird. Durch diese Vorgehensweise kann ein hoher Applikations-Aufwand vermieden werden. Der Übergang in die Parkstellung ist bei allen Wischfrequenzen harmonisch, auch wenn die Wischwinkel oder Trajektorien geändert werden. Der erfindungsgemäße Wischverlauf ist auch im Zusammenhang mit unterschiedlichen Parkstellungen implementierbar. Im übrigen ist der erfindungsgemäße Wischverlauf sehr gut für Mikrocontroller geeignet, da keine aufwändigen Rechenoperationen, beispielsweise Divisionen, erforderlich sind.

Erfindungsgemäß kann die Wischkennlinie etwa in Form tabellierter Sollwerte in der Steuerung gespeichert oder anderweitig vorgegeben, z. B. zur Laufzeit berechnet sein.

Durch die in den Unteransprüchen aufgeführten Maßnahmen ergeben sich vorteilhafte Weiterbildungen und Verbesserungen der im Hauptanspruch angegebenen Merkmale.

Gemäß einer Ausführungsform der Erfindung ist es vorteilhaft, dass die Realisierung der Verlängerung der Wischbewegung durch Erzeugung eines Sollablaufs erfolgt, der bei dem Sollwert der Wischkennlinie startet, der bei Anhalten der Zeitbasis erreicht ist. Ferner ist es vorteilhaft, dass die Verlängerung der Wischbewegung mit der Drehzahl des Reversiermotors startet, die bei Anhalten der Zeitbasis erreicht ist. Dies ist möglich, indem die aktuelle Soll-Motordrehzahl zum Zeitpunkt des Anhaltens der Zeitbasis bei der Verlängerung übernommen wird. Insgesamt ist es auf diese Weise möglich, den Übergang von der eigentlichen Wischbewegung in die Parkbewegung hinsichtlich Winkel und Drehzahl immer stetig zu gestalten.

Als besonders vorteilhaft wird eine Weiterbildung angesehen, die eine Realisierung der Verlängerung der Wischbewegung ermöglicht, indem auf einfache Weise ein Sollablauf für das Kurven-Zwischenstück erzeugt wird.

Dazu ist zunächst zur Erzeugung des Sollverlaufs der (gesamten) Wischbewegung in an sich bekannter Weise eine Denormierung durchführbar, um die aus der Wischkennlinie ausgelesenen normierten Sollwerte in physikalische Sollwerte umzurechnen. Die bei der Denormierung erfolgende Umrechnung der normierten in die physikalische Sollwerte kann beispielsweise gemäß einer Geradengleichung erfolgen.

Ferner läuft gemäß dieser Weiterbildung der Erfindung die Denormierung auch während des Anhaltens der Zeitbasis mit einem dann immer gleichen ausgelesenen normierten Sollwert weiter. Außerdem werden die in die Denormierung eingehenden physikalischen Werte für die obere und untere Wendelage, die so genannten Skalierwerte, vom Beginn bis zum Ende des Anhaltens der Zeitbasis rechnerisch - jeweils mit gleichem zeitlichen Verlauf und um den gleichen Betrag - kontinuierlich heruntergefahren, so dass durch das Herunterfahren ein zeitlicher Änderungsverlauf des bei der Denormierung errechneten physikalischen Sollwerts bewirkt ist, um so einen Sollverlauf zur Realisierung der Verlängerung der Wischbewegung zu erzeugen.

Gemäß dieser Weiterbildung wird demnach die zur Verlängerung der Wischbewegung notwendige reale Änderung des Wischwinkels durch eine rechnerische Parallelverschiebung der Skalierung der Wischwinkel hin zu einem tieferen Wertebereich erzeugt. Die Parallelverschiebung wird kontinuierlich, während der Dauer des Anhalten der Zeitbasis, vollzogen. Eine einfacher Weg zur Implementierung der Parallelverschiebung besteht darin, dass die physikalischen Werte für die obere und untere Wendelage während der Dauer des Anhaltens der Zeitbasis linear mit der Zeit heruntergefahren werden, so dass die Ablaufkurve der zum Abparken führenden Wischbewegung durch ein gerades Zwischenstück verlängerbar ist.

Die Festlegung des Punkts, an dem die Zeitbasis unterbrochen und mit der Verlängerung der Wischbewegung begonnen wird, ist auf verschiedene Weise möglich. Eine vorteilhafte Möglichkeit besteht darin, dass an einem vorgebbaren Punkt des Abwärtswischens eine Abfrage erfolgt, ob der Wischer abgeschaltet wurde, und dass bei positivem Ergebnis der Abfrage die Zeitbasis an diesem Abfragepunkt oder später unterbrochen und mit der Erzeugung der Verlängerung der Wischbewegung begonnen wird. Der Wischer kann also ohne weiteres auch erst nach der oberen Wendelage abgeschaltet werden. Wenn der Wischer andererseits vor der oberen Umkehrlage abgeschaltet wird, kann der Wischer von der oberen Umkehrlage aus entweder erfindungsgemäß durch Verlängerung der normalen Wischkennlinie oder gemäß einer eigenen Parkbewegungs-Kennlinie in die erweiterte Parkstellung fahren.

Zeichnungen

Ein Ausführungsbeispiel der Erfindung ist in den Figuren dargestellt und in der nachfolgenden Beschreibung näher erläutert. Es zeigen:

Figur 1 eine erfindungsgemäße Wischanlage mit einem in der Steuerung implementierten Parkstellungs-Wischverlauf,

Figur 2 und 3 die Wischkurven für zwei unterschiedliche Parkstellungs-Wischverläufe gemäß dem Stand der Technik,

Figur 4, in gleicher Darstellung wie Figur 2 und 3, die Wischkurve eines erfindungsgemäßen Parkstellungs-Wischverlaufs,

Figur 5 die erfindungsgemäße Wischkurve gemäß Figur 4 zusammen mit der Darstellung des zeitlichen Verlaufs der Zeitbasis und des rechnerisch induzierten zeitlichen Werteverlaufs für die obere und untere Umkehrlage.

Beschreibung des Ausführungsbeispiels

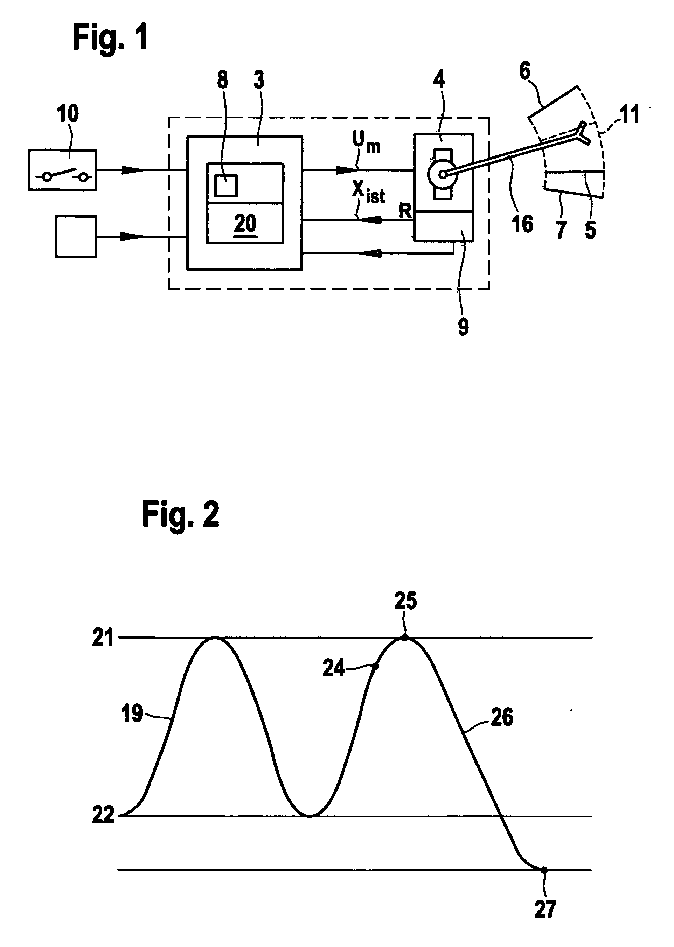

Die in Figur 1 dargestellte Scheibenwischvorrichtung weist eine Steuerungs- bzw. Regeleinheit 3 und einen durch die Regeleinheit 3 geregelten Motor 4 auf. Der elektronisch reversierbare Motor 4 treibt über ein nicht dargestelltes Getriebe einen Wischer 16 so an, dass er zwischen zwei Endpositionen (Wendelagen) 5 und 6 hin und her pendelt oder in die weitere Endposition, insbesondere eine erweiterte Parklage 7, abgelegt wird. Die Steuerung 3 weist einen Taktgeber 8 zur Erzeugung einer internen Zeitbasis und eine Auswerteeinheit 20 mit einem Sollwert-Tabellenspeicher auf. Im Ruhezustand befindet sich der Wischer 16 in der unteren Umkehrlage 5 und pendelt bei einer Bestromung des Reversiermotors 4 zwischen der unteren Umkehrlage 5 und einer oberen Umkehrlage 6.

An einer geeigneten Stelle des Motors 4, beispielsweise der Ankerwelle oder der Abtriebswelle, befinden sich Mittel zu deren Positionserfassung 9, die Positions-Istwerte Xist bzw. Wischwinkel als Regelgröße R über einen ersten Ist- Signaleingang an die Regeleinheit 3 bereitstellen. Über einen Signalausgang der Regeleinheit 3 wird ein Motorspannungssignal Um an den Motor 4 geleitet, um diesen in gewünschter Betriebsart geregelt zu betreiben. Ein durch den Fahrer manuell betätigbares Bedienelement 10 für die Wischanlage führt Betriebsartensignale der Regeleinheit 3 zu. Diese Signale lösen beispielsweise verschiedene Geschwindigkeits- und/oder Intervallstufen des Wischers 16 aus. Erkennbar ist auch der durch den Wischer 16 überstrichene, gestrichelt angedeutete Wischbereich 11.

Vorteilhaft einsetzbar für die Steuerung 3 ist eine mikrocontrollergesteuerte Elektronik. In der Regeleinheit 3 zur Regelung der Wischerposition, d.h. des Wischwinkels phi, werden Positions-Sollwerte Xsoll als Führungsgröße F in einer als Mikrocontroller ausgelegten Auswerteeinheit 20 abgelegt.

Dargestellt in Figur 2 ist Reversierwischen zwischen den Wischbereichsgrenzen 21 und 22 für die obere und die untere Wendelage, wobei ein aus dem Stand der Technik bekannter Parkstellungs-Wischverlauf zugrunde gelegt ist. Demgemäß wird für den Bewegungsablauf eine Kurvenform 19 vorgegeben, so dass der Bewegungsablauf z.B. sinusförmig ist. Beim Aufwärtswischen Richtung obere Wendelage 25 wird im Punkt 24, also vor der oberen Wendelage 25, das Wischen ausgeschaltet. Daraufhin fährt der Wischer 16 in der Abwärtsbewegung 26 direkt in die erweiterte Parkstellung EPS 27. Wie oben bereits erwähnt, setzt diese Arbeitsweise ein Abschalten vor der oberen Wendelage 25 voraus.

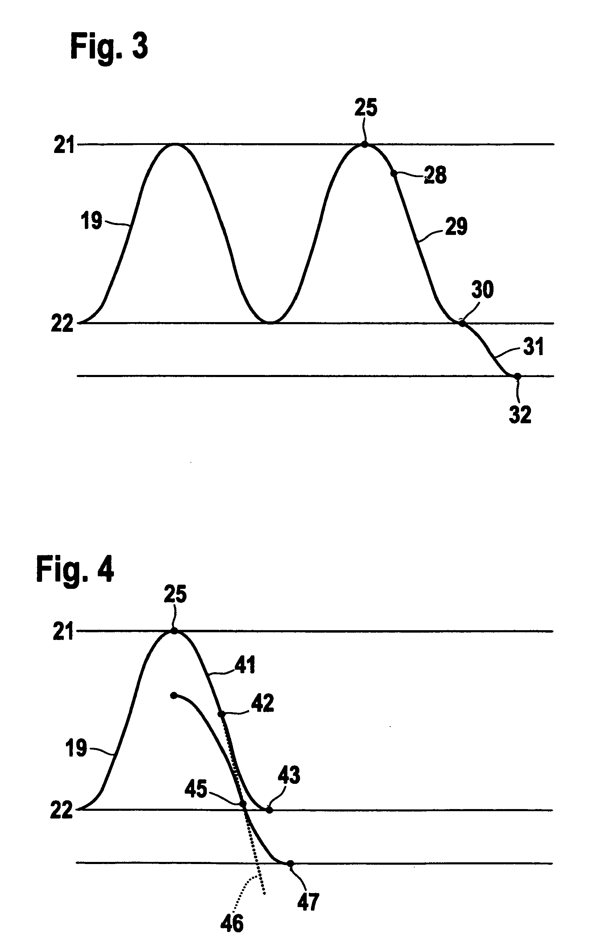

Figur 3 zeigt ebenfalls aus dem Stand der Technik bekanntes Reversierwischen zwischen den Wischbereichsgrenzen 21 und 22 für die obere und die untere Wendelage, jedoch mit anderem Parkstellungs-Wischverlauf als in Figur 2. Im Gegensatz zu Figur 2 wird erst im Abwärtswischen im Punkt 28, also nach der oberen Umkehrlage 25, ausgeschaltet. Deshalb fährt der Wischer zunächst in der vorgegebenen Bewegungsform 29 in die untere Umkehrlage 30 und dann mit einer zusätzlichen Bewegung 31 in das Ziel, die so genannte Erweiterte Parkstellung 32. Diese Doppelbewegung wird als unharmonisch empfunden und kann erfindungsgemäß vermieden werden.

Figur 4 zeigt schematisch, wie die im Ablauf befindliche Abwärts-Wischbewegung erfindungsgemäß verlängert wird. Der Motor 4 startet in der oberen Wendelage 25 zunächst die reguläre Bewegung 41 Richtung untere Wendelage 43. Im Punkt 42 erfolgt eine Abfrage und da Wischen ausgeschaltet wurde, soll der Motor 4 direkt ins Ziel EPS 47 fahren. Deshalb wird im Punkt 42 die Kurve der Bewegung 41 beispielsweise mit einer Geraden 46 verlängert bis zum Punkt 45. Ab Punkt 45 wird das verbliebene Teilstück der Kurve der Bewegung 41 abgearbeitet.

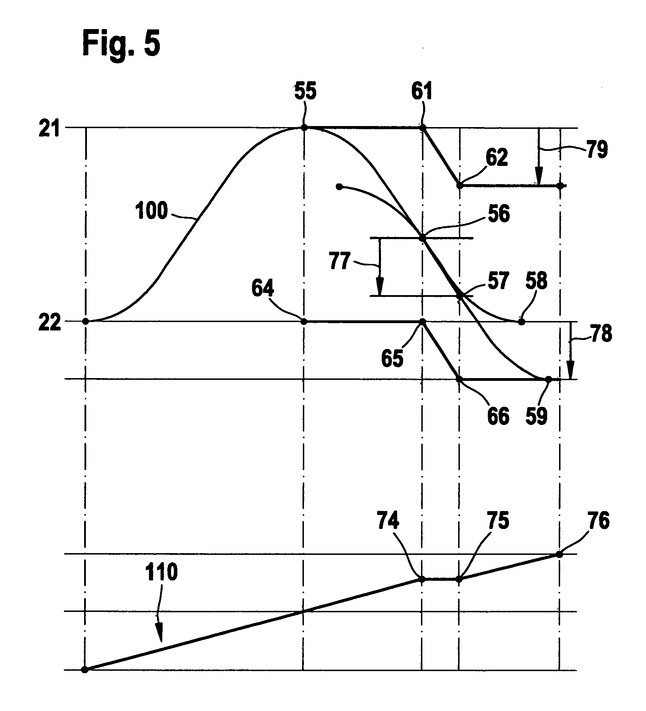

Figur 5 zeigt, wie die Verlängerung der Parkstellungs-Wischverlaufskurve 100 realisiert wird. Die Kurve 100 durchläuft beim Abwärtswischen drei Phasen:

In Phase 1 startet der Motor 4 aus der oberen Wendelage 55 Richtung untere Wendelage 58. Die Kurve 100 wird zwischen oberer Wendelage 55-61 und unterer Wendelage 64-65 skaliert, d. h. die normierten Sollwerte $phi_{Norm}$ werden zur in der Steuerung 3 erfolgenden Umrechnung in physikalische Sollwerte auf eine Skala bezogen, die durch die Endwerte des gegebenen Wischwinkelbereichs, also die Wendelagenwerte (Skalierwerte) 55 und 64 gegeben ist. Im Einzelnen ergibt sich die Bewegung durch die ständig im Eingriff befindliche Denormierung nach folgender Formel (Geradengleichung, UW: untere Wendelage, OW: obere Wendelage, phi: aktueller Wischwinkel):

$$phi_{Phys} = ((OW_{phys} - UW_{phys}) / (OW_{norm} - UW_{norm})) \cdot phi_{Norm} + UW_{phys}$$

, wobei $UW_{norm} = 0$ gewählt wird. In der Phase 1 erfolgt die Denormierung, wie üblich, mit zeitlich konstanten Skalierwerten, so dass sich die reale Änderung von $phi_{Phys}$ allein durch unterschiedliche, nacheinander ausgelesene Werte $phi_{Norm}$ ergibt. Der Motor 4 fährt also von Punkt 55 bis Punkt 56 durch Ansteuern der tabellierten Sollwerte $phi_{Norm}$ gemäß der dargestellten Zeitbasis 110, die den Zeitverlauf der internen Programmabarbeitung angibt.

In Phase 2 wird die Zeitbasis 110 vom Punkt 74 bis zum Punkt 75 angehalten, die Lesegeschwindigkeit der normierten Sollwerte, die in den Phasen 2 und 3 konstant ist, ist für die Dauer der Phase 2 Null. Die Denormierung läuft jedoch auch während des Anhaltens der Zeitbasis 110 mit einem dann immer gleichen ausgelesenen normierten Sollwert weiter. Die Wischer-Bewegung zwischen Punkt 56 und 57 erzeugt man dadurch, dass die Skalierung der Kurve parallel in Richtung Ziel verschoben wird. Die Zeitbasis 110 bleibt in diesem Abschnitt angehalten, vgl. 74-75. Die zur Verlängerung der Wischbewegung notwendige reale Änderung des Wischwinkels $phi_{Phys}$ wird demnach durch eine rechnerische Parallelverschiebung der Skalierung der Wischwinkel hin zu einem tieferen Wertebereich erzeugt. Die Parallelverschiebung wird kontinuierlich, während der Dauer des Anhalten der Zeitbasis 110, vollzogen. Wie dargestellt, vgl. die lineare Änderung des oberen und unteren Skalierwertes zwischen den Punkten 61 und 62 bzw. 65 und 66, werden die physikalischen Werte für die obere und untere Wendelage während der Dauer des Anhaltens der Zeitbasis 110 am einfachsten linear mit der Zeit heruntergefahren, so dass die Ablaufkurve der zum Abparken führenden Wischbewegung durch ein gerades Zwischenstück 56-57 verlängerbar ist.

Damit die Bewegung stetig ist, übernimmt der Motor 4 in Punkt 56 die in der Steuerung 3 vorliegende aktuelle Soll- Motordrehzahl und startet mit dieser ab Punkt 56. Phase 2 ist beendet, wenn der untere Skalierwert den Zielwert 66 erreicht hat. Die Differenz-Wischwinkel 77, 78 und 79 sind gleich groß.

In Phase 3 wird die Bewegung wieder über die Zeitbasis 110 gesteuert, vgl. 75-76. Oberer Skalierwert 62 und unterer Skalierwert 66 bleiben konstant. Wenn die Zeitbasis ihren Endwert 76 erreicht hat, ist auch die Bewegung im Ziel 59, d. h. der Wischer hat die erweiterte Parkstellung erreicht.

**Patentansprüche**

1. Scheibenwischanlage für ein Kraftfahrzeug, mit mindestens einem von einem Reversiermotor (4) zwischen zwei Wendelagen (55, 58) angetriebenen Wischer (16) und einer elektronischen Steuerung (3), in der mindestens eine Wischkennlinie vorgegeben ist, deren Sollwertverlauf mittels einer intern vorgebbaren Zeitbasis (110) sequenziell abarbeitbar ist, um einen Sollablauf einer Bewegung des Wischers (16) zu erzeugen,
   **dadurch gekennzeichnet,**
   **dass** das Abarbeiten der Wischkennlinie an einem vorgebbaren Punkt (56) des Abwärtswischens durch Anhalten der Zeitbasis (110) unterbrechbar ist, und dass die Wischbewegung zwischen diesem und einem weiteren Punkt (57) bei angehaltener Zeitbasis (110) stetig verlängerbar ist, so dass von dem weiteren Punkt (57) aus eine Parklage (59) des Wischers (16) durch Abarbeiten des verbliebenen Teils der Wischkennlinie bei dann weiterlaufender Zeitbasis (110) erreichbar ist.

2. Scheibenwischanlage nach Anspruch 1, **dadurch gekennzeichnet, dass** die Verlängerung der Wischbewegung durch Erzeugung eines Sollablaufs realisiert ist, der bei dem Sollwert der Wischkennlinie startet, der bei Anhalten der Zeitbasis (110) erreicht ist.

3. Scheibenwischanlage nach Anspruch 2, **dadurch gekennzeichnet, dass** die Verlängerung der Wischbewegung mit der Drehzahl des Reversiermotors (4) startet, die bei Anhalten der Zeitbasis (110) erreicht ist.

4. Scheibenwischanlage nach Anspruch 3, **dadurch gekennzeichnet, dass** die aktuelle Soll-Motordrehzahl zum Zeitpunkt des Anhaltens der Zeitbasis (110) von der Steuerung (3) zur Erzeugung der Verlängerung der Wischbewegung übernommen wird.

5. Scheibenwischanlage nach einem der Ansprüche 2 bis 4, **dadurch gekennzeichnet, dass** zur Erzeugung des Sollverlaufs der Wischbewegung eine Denormierung durchführbar ist, um die aus der Wischkennlinie ausgelesenen normierten Sollwerte in physikalische Sollwerte umzurechnen, dass die Denormierung während des Anhaltens der Zeitbasis (110) mit einem dann immer gleichen ausgelesenen normierten Sollwert weiterläuft, und dass die in die Denormierung eingehenden physikalischen Werte für die obere und untere Wendelage (55, 58) vom Beginn bis zum Ende des Anhaltens der Zeitbasis (110) rechnerisch - jeweils mit gleichem zeitlichen Verlauf und um den gleichen Betrag - kontinuierlich heruntergefahren werden, so dass durch das Herunterfahren ein zeitlicher Änderungsverlauf des bei der Denormierung errechneten physikalischen Sollwerts bewirkt ist, um so einen Sollverlauf zur Realisierung der Verlängerung der Wischbewegung zu erzeugen.

**6.** Scheibenwischanlage nach Anspruch 5, **dadurch gekennzeichnet, dass** die bei der Denormierung erfolgende Umrechnung der normierten in die physikalischen Sollwerte gemäß einer Geradengleichung erfolgt.

**7.** Scheibenwischanlage nach einem der Ansprüche 5 oder 6, **dadurch gekennzeichnet, dass** die physikalischen Werte für die obere und untere Wendelage (55, 58) während der Dauer des Anhaltens der Zeitbasis (110) linear mit der Zeit heruntergefahren werden, so dass die Ablaufkurve (100) der zum Abparken führenden Wischbewegung durch ein gerades Zwischenstück (56-57) verlängerbar ist.

**8.** Scheibenwischanlage nach einem der Ansprüche 1 bis 7, **dadurch gekennzeichnet, dass** an einem vorgebbaren Punkt (56) des Abwärtswischens eine Abfrage erfolgt, ob der Wischer (16) abgeschaltet wurde, und dass bei positivem Ergebnis der Abfrage die Zeitbasis (110) an diesem Abfragepunkt oder später (56) unterbrochen und mit der Erzeugung der Verlängerung der Wischbewegung begonnen wird.

**Claims**

**1.** Window wiping system for a motor vehicle, having at least one wiper (16) driven by a reversing motor (4) between two turning positions (55, 58), and an electronic controller (3) in which at least one wiping characteristic is provided whose desired value profile can be sequentially processed by means of an internally prescribable time basis (110) in order to produce a desired sequence of a movement of the wiper (16), **characterized in that** the processing of the wiping characteristic can be interrupted at a prescribable point (56) of the downward wiping by stopping the time base (110), and **in that** the wiping movement between this and a further point (57) can be continuously lengthened with the time base (110) stopped, such that it is possible to reach a parking position (59) of the wiper (16) from the further point (57) by processing the remaining part of the wiping characteristic with the time base (110) then continuing to run.

**2.** Window wiping system according to Claim 1, **characterized in that** the lengthening of the wiping movement is implemented by producing a desired sequence which starts at the desired value of the wiping characteristic which is reached upon stopping of the time base (110).

**3.** Window wiping system according to Claim 2, **characterized in that** the lengthening of the wiping movement starts at the speed of the reversing motor (4), which is reached upon stopping of the time base (110).

**4.** Window wiping system according to Claim 3, **characterized in that** the current desired motor speed at the instant of stopping of the time base (110) is adopted by the controller (3) in order to produce the lengthening of the wiping movement.

**5.** Window wiping system according to one of Claims 2 to 4, **characterized in that** a denormalization can be carried out so as to produce the desired profile of the wiping movement in order to convert the normalized desired values read out from the wiping characteristic into physical desired values, **in that** the denormalization continues to run during the stopping of the time base (110) with a then always equal read out normalized desired value, and **in that** the physical values, featuring in the denormalization, for the upper and lower turning positions (55, 58) are continuously decremented computationally - in each case with the same time profile and by the same absolute value - from the beginning to the end of the stopping of the time base (110), such that the decrementing effects a temporal change profile of the physical desired value calculated in the denormalization, so as thus to produce a desired profile in order to implement the lengthening of the wiping movement.

**6.** Window wiping system according to Claim 5, **characterized in that** the conversion of the normalized into the physical desired values which is performed during the denormalization is performed in accordance with a line equation.

**7.** Window wiping system according to either of Claims 5 or 6, **characterized in that** the physical values for the upper and lower turning position (55, 58) are decremented linearly with time over the duration of the stopping of the time base (110) such that the sequence curve (100) of the wiping movement leading to parking can be lengthened by a rectilinear extension (56-57).

**8.** Window wiping system according to one of Claims 1 to 7, **characterized in that** interrogation is performed at a prescribable point (56) of the downward wiping as to whether the wiper (16) has been switched off, and **in that** in the event of a positive result of the interrogation, the time base (110) is interrupted at this interrogation point or later (56), and a start is made on producing the lengthening of the wiping movement.

**Revendications**

1. Installation d'essuie-glace de véhicule automobile comportant au moins un essuie-glace (16) entraîné entre deux positions d'inversion (55, 58) par un moteur réversible (4) ainsi qu'une commande électronique (3) dans laquelle est prédéfinie au moins une caractéristique d'essuyage dont l'évolution de la valeur de consigne peut être traitée séquentiellement à l'aide d'une base de temps (110) prédéfinie de manière interne, pour générer une évolution de consigne d'un mouvement d'essuie-glace (16),
   **caractérisé en ce que**
   le traitement de la courbe caractéristique d'essuyage peut être interrompu à un point prédéfini (56) du mouvement d'essuyage descendant, par l'arrêt de la base de temps (110) et
   le mouvement d'essuyage peut être prolongé de façon continue entre ce point et un autre point (57) la base de temps (110) étant retenue, de façon qu'à partir de cet autre point (57), on puisse atteindre une position de rangement (59) de l'essuie-glace (16) par le traitement de la partie restante de la courbe caractéristique d'essuyage en laissant fonctionner la base de temps (110).

2. Installation d'essuie-glace selon la revendication 1,
   **caractérisée en ce que**
   on prolonge le mouvement d'essuyage en générant un déroulement de consigne qui démarre à la valeur de consigne de la courbe caractéristique d'essuyage, atteinte lors de l'arrêt de la base de temps (110).

3. Installation d'essuie-glace selon la revendication 2,
   **caractérisée en ce que**
   le prolongement du mouvement d'essuyage commence avec la vitesse de rotation du moteur réversible (4) atteinte lors de l'arrêt de la base de temps (110).

4. Installation d'essuie-glace selon la revendication 3,
   **caractérisée en ce que**
   la vitesse de rotation de consigne actuelle du moteur à l'instant de l'arrêt de la base de temps (110) est reprise par la commande (3) pour générer le prolongement du mouvement d'essuyage.

5. Installation d'essuie-glace selon l'une des revendications 2 à 4,
   **caractérisée en ce qu'**
   on effectue une dénormalisation pour générer la courbe de consigne du mouvement d'essuyage, pour convertir par calcul les valeurs de consigne normées, lues dans la courbe caractéristique d'essuyage en des valeurs physiques de consigne,
   la dénormalisation se poursuit pendant l'arrêt de la base de temps (110) avec une valeur de consigne normée, lue, toujours identique, et
   les valeurs physiques intervenant dans la dénormalisation pour la position d'inversion supérieure et inférieure (55, 58) sont abaissées à partir du début jusqu'à la fin de l'arrêt de la base de temps (110), par le calcul (chaque fois avec la même évolution chronologique et la même amplitude) de façon continue pour que l'abaissement donne une courbe de variation dans le temps de la valeur physique de consigne calculée par la dénormalisation, et génère ainsi une courbe de consigne pour réaliser le prolongement du mouvement d'essuyage.

6. Installation d'essuie-glace selon la revendication 5,
   **caractérisée en ce que**
   la conversion par calcul produite lors de la dénormalisation des valeurs de consignes normées, en valeurs de consigne physiques se fait suivant une équation linéaire.

7. Installation d'essuie-glace selon l'une des revendications 5 ou 6,
   **caractérisée en ce que**
   les valeurs physiques de la position d'inversion supérieure et inférieure (55, 58), pendant la durée de l'arrêt de la base de temps (110) sont abaissées suivant une fonction linéaire du temps pour que la courbe de déroulement (100) soit prolongée pour mener en position de rangement, le mouvement d'essuyage par un segment intermédiaire (56, 57) droit.

**8.** Installation d'essuie-glace selon l'une des revendications 1 à 7,
**caractérisée en ce qu'**
en un point prédéfini (56) du mouvement d'essuyage descendant, une requête demande si l'essuie-glace (16) a été coupé et
en cas de réponse positive à la requête, la base de temps (110) est interrompue à ce point d'interrogation ou ultérieurement (56) et on commence par générer le prolongement du mouvement d'essuyage.

# Fig. 1

# Fig. 2

# Fig. 3

# Fig. 4

10

# Fig. 5

**EP 1 787 877 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19700457 C1